# DEMANDE DE BREVET EUROPEEN

(11) **EP 3 832 535 A1**
(43) Date de publication de la demande: **09.06.2021**
(21) Numéro de dépôt: 20211386.6
(22) Date de dépôt: 02.12.2020
(51) Int. Cl.: G06K 9/00, G06K 9/62, G06K 9/46

(54) **PROCÉDÉ DE DÉTECTION D'AU MOINS UN ÉLÉMENT D'INTÉRÊT VISIBLE DANS UNE IMAGE D'ENTRÉE AU MOYEN D'UN RÉSEAU DE NEURONES À CONVOLUTION**

(30) Priorité: 03.12.2019 FR 1913654
(71) Demandeur: Idemia Identity & Security France, 92400 Courbevoie (FR)
(72) Inventeur: MABYALAHT, Guy, 92400 COURBEVOIE (FR); KAZDAGHLI, Laurent, 92400 COURBEVOIE (FR)
(74) Mandataire: Regimbeau

(57) **Abrégé**

La présente invention concerne un procédé de détection d'élément d'intérêt visible sur une image d'entrée, comprenant des étapes de :
(a) Extraction, au moyen d'une branche montante d'un FPN d'un CNN, d'une pluralité de cartes de caractéristiques initiales représentatives de l'image d'entrée à des échelles différentes, ledit FPN comprenant en outre une branche descendante et des connexions latérales entre la branche montante et la branche descendante, chaque connexion latérale transmettant de la branche montante à la branche descendante du FPN une carte de caractéristique initiale à laquelle elle est associée de manière unique, au moins une connexion latérale associée à une carte de caractéristiques initiale autre que la carte de caractéristiques initiale de plus petite échelle comprenant un module d'attention ;
(b) Génération, au moyen de ladite branche descendante du FPN, d'une pluralité de cartes de caractéristiques enrichies également représentatives de l'image d'entrée à des échelles différentes, chaque carte de caractéristiques enrichie intégrant l'information des cartes de caractéristiques initiales d'échelle inférieure ou égale ;
(d) Détection de l'élément d'intérêt, au moyen d'un réseau de détection dudit CNN, prenant en entrée lesdites cartes de caractéristiques enrichies.

## Description

### DOMAINE TECHNIQUE GENERAL

La présente invention concerne le domaine de la biométrie, et propose en particulier un procédé de détection d'au moins un élément d'intérêt visible dans d'une image d'entrée, en particulier au moins une empreinte biométrique, au moyen d'un réseau de neurones à convolution, ainsi qu'un procédé d'apprentissage du réseau de neurones à convolution.

### ETAT DE L'ART

L'authentification/identification biométrique consiste à reconnaitre un individu sur la base de traits biométriques de cet individu tels que les empreintes digitales (reconnaissance digitale), les empreintes palmaires, les empreintes rétiniennes, l'iris ou le visage (reconnaissance faciale).

Les approches biométriques classiques utilisent les informations caractéristiques du trait biométrique extraites à partir de la biométrie acquise, appelées « features », et l'apprentissage/classification est réalisé sur la base de la comparaison de ces caractéristiques.

En particulier, dans le cas de la reconnaissance digitale, les images d'extrémité de doigt sont traitées de sorte à extraire les caractéristiques d'une empreinte qui peuvent être classées en trois catégories :
- Le niveau 1 définit le motif général de cette empreinte (une des quatre classes : boucle à droite, boucle à gauche, arche et spirale), et le tracé global des crêtes (on obtient en particulier une carte d'orientation dite « Ridge Flow Matrix », carte RFM, qui représente en chaque point de l'empreinte la direction générale de la crête).
- Le niveau 2 définit les points particuliers des empreintes appelés minuties, qui constituent des « événements » le long des crètes (fin d'une crête, bifurcation, etc.). Les approches classiques de reconnaissance utilisent essentiellement ces caractéristiques.
- Le niveau 3 définit des informations plus complexes telles que la forme des crêtes, les pores de la peau, des cicatrices, etc.

On appelle ainsi un « codage » le procédé d'extraction des caractéristiques d'une empreinte (sous la forme de cartes de caractéristiques, ou « feature maps »), lesquelles permettent de composer une signature appelée « template » encodant l'information utile à la phase finale de classification. Plus précisément, on va réaliser la classification par comparaison des cartes de caractéristiques obtenues avec une ou plusieurs carte(s) de caractéristiques de référence associée(s) à des individus connus.

Si on dispose aujourd'hui de « codeurs » réalisant efficacement cette opération d'extraction de caractéristiques sur des empreintes acquises d'une manière relativement standardisée (par exemple sur des bornes de systèmes biométriques), on a une difficulté avec les empreintes dites latentes, par exemple celles trouvées sur une scène de crime. Deux images d'empreintes de la même identité peuvent présenter l'une par rapport à l'autre de fortes rotations, des occultations ainsi qu'un ensemble de distorsions. De surcroit, l'arrière-plan d'empreintes latentes est généralement très bruité et on a un risque que des minuties sont identifiées par erreur sur cet arrière-plan.

Par conséquent, le traitement automatique d'empreintes latentes est aujourd'hui précédé d'une tâche mise en œuvre par un expert consistant à « entourer » à la main chaque empreinte latente d'intérêt pour l'isoler, avant de la fournir au codeur. Cette tâche revient à une opération de segmentation des empreintes latentes, les zones entourées étant désignées « masques de segmentation », et à ce titre il serait souhaitable de la mettre en œuvre automatiquement.

On connait en effet des réseaux de neurones à convolution (CNN) dédiés, tels que le réseau U-Net (voir la publication RONNEBERGER, Olaf, FISCHER, Philipp, et BROX, Thomas. U-net: Convolutional networks for biomedical image segmentation. In : International Conference on Medical image computing and computer-assisted intervention. Springer, Cham, 2015. p. 234-241*),* ou le réseau Mask R-CNN (voir la publication Kaiming He Georgia Gkioxari Piotr Doll'ar Ross Girshick, Mask R-CNN, Facebook Al Research (FAIR), 20 Mar 2017*),* mais en pratique on constate que les résultats sur les empreintes digitales ne sont pas à la hauteur des attentes.

Plus récemment, le CNN FingerNet (voir TANG, Yao, GAO, Fei, FENG, Jufu, et al. Fingernet: An unified deep network for fingerprint minutiae extraction. In : 2017 IEEE International Joint Conference on Biometrics (IJCB). IEEE, 2017. p. 108-116) permet entre autres cette tâche de segmentation, mais s'avère beaucoup trop lourd et complexe pour une utilisation pratique.

Il serait par conséquent souhaitable de disposer d'une solution à la fois plus performante et plus légère de segmentation d'images en particulier d'empreintes biométriques telles que des empreintes digitales latentes, en vue d'extraction de leurs caractéristiques.

### PRESENTATION DE L'INVENTION

Selon un premier aspect, la présente invention concerne un procédé de détection d'au moins un élément d'intérêt visible sur une image d'entrée, au moyen d'un réseau de neurones à convolution, CNN, le procédé étant caractérisé en ce qu'il comprend la mise en œuvre, par des moyens de traitement de données d'un client, d'étapes de :
(a) Extraction, au moyen d'une branche montante d'un premier sous-réseau dudit CNN de type réseau à pyramide de caractéristiques, FPN, d'une pluralité de cartes de caractéristiques initiales représentatives de l'image d'entrée à des échelles différentes, ledit FPN comprenant en outre une branche descendante et des connexions latérales entre la branche montante et la branche descendante, au moins une connexion latérale comprenant un module d'attention ;
(b) Génération, au moyen de ladite branche descendante du FPN, d'une pluralité de cartes de caractéristiques enrichies également représentatives de l'image d'entrée à des échelles différentes, chaque carte de caractéristiques enrichie intégrant l'information des cartes de caractéristiques initiales d'échelle inférieure ou égale ;
(d) Détection d'au moins un élément d'intérêt visible sur une image d'entrée, au moyen d'un deuxième sous-réseau dudit CNN, dit réseau de détection, prenant en entrée lesdites cartes de caractéristiques enrichies.

Selon d'autres caractéristiques avantageuses et non-limitatives :
Pour chaque carte de caractéristiques enrichie, une carte de caractéristiques initiale de même échelle est transmise de la branche montante à la branche descendante du FPN via une connexion latérale associée de manière unique à cette carte de caractéristiques initiale.

La carte de caractéristiques initiale de plus grande échelle n'est pas transmise de la branche montante à la branche descendante du FPN.

La carte de caractéristiques enrichie de plus petite échelle est générée à partir de la carte de caractéristiques initiale de plus petite échelle, chaque autre carte de caractéristiques enrichie est générée à partir de la carte de caractéristiques initiale de même échelle et d'une carte de caractéristiques enrichie d'échelle inférieure.

Chaque connexion latérale comprend un module d'attention pour la focalisation de la carte de caractéristiques initiales transmise via ladite connexion latérale.

Chaque autre carte de caractéristiques enrichie est générée en ajoutant la carte de caractéristiques initiale focalisée par le module d'attention et la carte de caractéristiques enrichie d'échelle inférieure mise à la même échelle que ladite carte de caractéristiques initiales.

La connexion latérale associée à la carte de caractéristiques initiale de plus petite échelle comprend un premier module d'attention, et chaque autre connexion latérale comprend un deuxième module d'attention.

Le premier module d'attention est un module d'attention à pyramide de caractéristiques, FPA ; et/ou le deuxième module d'attention est un module d'attention globale pour suréchantillonnage, GAU.

Le procédé comprend en outre une étape (c) d'identification dans les cartes de caractéristiques enrichies, au moyen d'un troisième sous-réseau dudit CNN de type réseau de proposition de région, RPN, de régions d'intérêt contenant potentiellement un élément d'intérêt.

L'étape (c) comprend le réalignement par un module de rognage du CNN de chaque carte de caractéristiques enrichie en fonction des régions d'intérêt identifiées, l'étape (d) étant mise en œuvre sur les cartes de caractéristiques enrichie réalignées.

Le procédé comprenant une étape (a0) préalable d'apprentissage, par des moyens de traitement de données d'un serveur, à partir d'une base d'images d'élément d'intérêts déjà annotés, de paramètres dudit CNN.

L'étape (d) comprend la segmentation de l'image d'entrée.

Les éléments d'intérêts sont des empreintes biométriques, le procédé comprenant une étape (e) de traitement de ladite image d'entrée segmentée de sorte à extraire lesdites caractéristiques recherchées de chaque empreinte biométrique représentée par ladite image d'entrée.

Lesdites empreintes biométriques sont des empreintes digitales, les caractéristiques recherchées à extraire de l'au moins une empreinte digitale représentée par ladite image d'entrée comprenant la position et/ou l'orientation de minuties.

L'au moins une empreinte biométrique représentée par l'image d'entrée est celle d'un individu, le procédé comprenant en outre une étape (f) d'identification ou d'authentification dudit individu par comparaison des caractéristiques recherchées extraites de l'empreinte biométrique représentée par ladite image d'entrée, avec les caractéristiques d'empreintes biométriques de référence.

Selon un deuxième et un troisième aspect sont proposés un produit programme d'ordinateur comprenant des instructions de code pour l'exécution d'un procédé selon le premier aspect de détection d'au moins un élément d'intérêt visible sur une image d'entrée ; et un moyen de stockage lisible par un équipement informatique sur lequel un produit programme d'ordinateur comprend des instructions de code pour l'exécution d'un procédé selon le premier aspect de détection d'au moins un élément d'intérêt visible sur une image d'entrée

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 est un schéma d'une architecture pour la mise en œuvre du procédé selon l'invention ;
[Fig. 2] la figure 2 représente un exemple connu de réseau de neurones à convolution de type Mask R-CNN ;
[Fig. 3a] la figure 3 représente un exemple connu d'un sous-réseau de type réseau à pyramide de caractéristiques pour un réseau de neurones à convolution de type Mask R-CNN ;
[Fig. 3b] la figure 3b représente un exemple d'un sous-réseau de réseau à pyramide de caractéristiques pour un réseau de neurones à convolution pour la mise en œuvre du procédé selon l'invention ;
[Fig. 4] la figure 4 représente les étapes d'un mode de réalisation préféré du procédé selon l'invention ;
[Fig. 5a] la figure 5a représente un exemple de module d'attention globale pour suréchantillonnage ;
[Fig. 5b] la figure 5b représente un exemple de module d'attention à pyramide de caractéristiques ;
[Fig. 6] la figure 6 compare des exemples de masques de segmentation obtenus avec l'état de l'art, et des modes de réalisation du procédé selon l'invention.

### DESCRIPTION DETAILLEE

### Architecture

Selon deux aspects complémentaires de l'invention, sont proposés :
- Un procédé de détection d'au moins un élément d'intérêt visible dans une image d'entrée, en particulier au moins une empreinte biométrique, au moyen d'un réseau de neurones à convolution, CNN, et le cas échéant d'extraction de caractéristiques recherchées de l'au moins une empreinte biométrique représentée par l'image d'entrée ;
- Un procédé d'apprentissage de paramètres dudit CNN.

Les données d'entrée ou d'apprentissage sont de type image, et au moins un élément d'intérêt y est visible.

Ici, le terme « élément d'intérêt » désigne toute représentation dans l'image d'une entité dont on souhaite la détection dans une image. Chaque élément d'intérêt est d'une catégorie donnée, correspondant à un type au sens sémantique. Par exemple, les catégories personne, visage, véhicule, empreinte biométrique, etc. peuvent être considérées.

Chaque élément d'intérêt est préférentiellement une empreinte biométrique (en d'autres termes il s'agit d'images représentant au moins une empreinte biométrique), avantageusement choisie parmi une empreinte digitale, une empreinte palmaire, une empreinte rétinienne, etc., et de façon générale toute empreinte pouvant être représentée par une image et associée de manière unique à un individu. De façon préférée ladite empreinte biométrique est une empreinte digitale et on prendra cet exemple dans la suite de la description (comme l'on verra, le présent procédé est tout particulièrement efficace notamment dans le cas des empreintes digitales latentes).

La « détection », ou « reconnaissance » est l'opération la plus basique, et désigne le simple marquage d'un élément d'intérêt d'une catégorie connue dans une image. La détection combine ainsi la localisation (typiquement détermination de la position et la taille d'une boite englobant l'élément d'intérêt, dite boite de détection, en anglais « box ») et la classification (détermination de sa catégorie). La détection d'éléments d'intérêt consiste ainsi en pratique en la génération d'une ou plusieurs « annotations » quelconques qui localisent dans l'image d'entrée la ou les zones de l'image d'entrée qui contiennent un élément d'intérêt tel qu'une empreinte biométrique, par exemple des boites englobant les éléments d'intérêt, dites boites de détection, en anglais « box » (définies par leur taille et leur position).

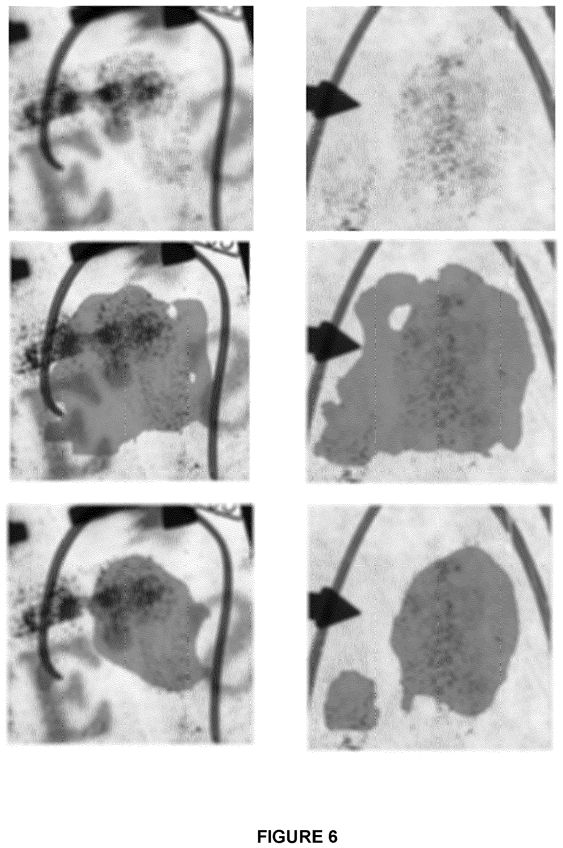

Dans le cas préféré où la détection est plus particulièrement une « segmentation », l'annotation générée est un « masque de segmentation » (ou carte de segmentation) de l'image d'entrée (voir par exemple la figure 6), c'est-à-dire une image binaire de même taille que l'image initiale. Plus précisément, les pixels de l'image d'entrée ayant un pixel correspondant « blanc » dans le masque de segmentation sont considérés comme des pixels d'un élément d'intérêt, et les pixels de l'image d'entrée ayant un pixel correspondant « noir » dans le masque de segmentation sont considérés comme des pixels de l'arrière-plan (et donc sans intérêt).

On suppose qu'un ensemble connexe de pixels blancs du masque de segmentation constitue un élément d'intérêt détecté, et on peut avoir plusieurs éléments d'intérêt tels que des empreintes biométriques sur la même image d'entrée (en particulier dans le cas d'empreintes digitales latentes, où un individu peut avoir posé plusieurs doigts à coté sur une surface) : l'application du masque sur l'image d'entrée permet d'isoler chaque empreinte biométrique qui y est représentée, de la même façon qu'un expert entourerait à la main chaque empreinte qu'il a détectée. L'intérêt du masque de segmentation est qu'une part la détection est plus fine (on dispose du contour des éléments d'intérêt), et que d'autre part le fond de l'image est « caché » de sorte que d'autres algorithmes de traitement d'image peuvent être mis en œuvre sans être perturbés par des détails de ce fond.

L'éventuelle extraction sous-jacente de caractéristiques consiste typiquement en un « codage » d'une empreinte détectée, voire isolée grâce au masque, i.e. lesdites caractéristiques recherchées à extraire sont typiquement des caractéristiques « biométriques », c'est-à-dire les caractéristiques « finales » permettant de composer un template de l'empreinte en tant que trait biométrique d'un individu en vue de faire de la classification (identification/authentification d'individu, voir plus loin). A ce titre, dans le cas d'empreintes digitales lesdites caractéristiques recherchées décrivent typiquement des minuties, c'est-à-dire qu'elles comprennent la position et/ou l'orientation des minuties. Toutefois, on comprendra que le présent procédé n'est pas limité à ce mode de réalisation, et toutes les caractéristiques possiblement d'intérêt en biométrie peuvent être extraites.

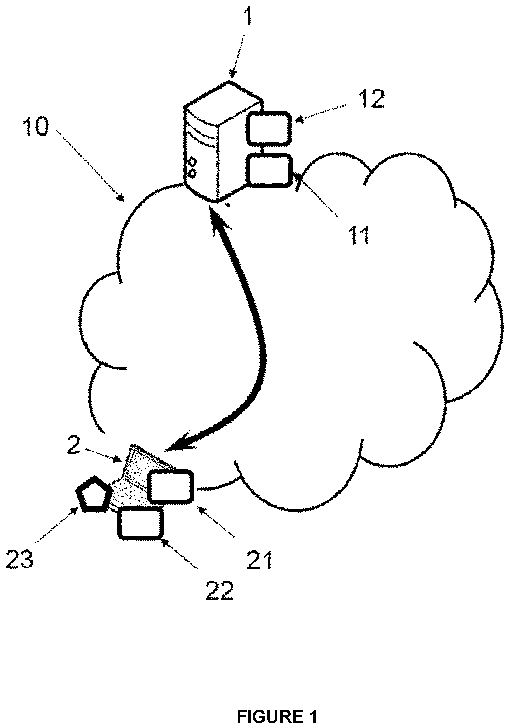

Les présents procédés sont mis en œuvre au sein d'une architecture telle que représentée par la figure 1, grâce à un serveur 1 et un client 2. Le serveur 1 est l'équipement d'apprentissage (mettant en œuvre le procédé d'apprentissage) et le client 2 est un équipement d'utilisation (mettant en œuvre le procédé de détection/segmentation et le cas échéant d'extraction de caractéristiques), par exemple un terminal d'un utilisateur.

Il est tout à fait possible que les deux équipements 1, 2 soient confondus, mais de façon préférée le serveur 1 est celui d'un fournisseur de solution de sécurité, et le client 2 un équipement grand public, notamment un scanner d'empreintes biométriques, mais également un smartphone, un ordinateur personnel, etc. L'équipement client 2 comprend avantageusement des moyens d'acquisition optiques 23, de sorte à pouvoir directement acquérir ladite image d'entrée, typiquement pour la traiter en direct, alternativement on chargera l'image d'entrée sur l'équipement client 2 (par exemple, des empreintes digitales latentes peuvent être prises en photo sur une scène de crime par une équipe de police scientifique, et ces photos ensuite chargées sur un équipement client 2 dédié de retour dans les locaux de la police scientifique).

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple une mémoire flash ou un disque dur.

Le serveur 1 stocke une base de données d'apprentissage, i.e. un ensemble d'images déjà annotées (i.e. pour lesquelles on dispose déjà par exemple d'un masque de segmentation) par opposition aux images dites d'entrée que l'on cherche justement à traiter.

### Mask R-CNN

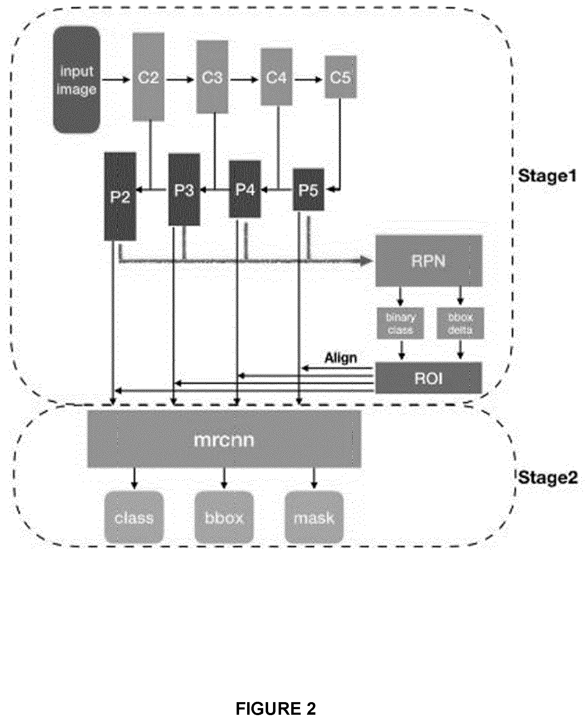

Comme expliqué, on connait notamment le réseau Mask R-CNN dont l'architecture est représentée par la figure 2. En référence à cette figure 2, Mask R-CNN est un CNN divisé en deux ensembles notés stage 1 et stage 2. On s'intéressera dans la cadre de la présente invention à un CNN présentant une architecture similaire à Mask R-CNN.

Le « stage 1 » permet un pré-traitement des images d'entrée, et comprend essentiellement un premier sous-réseau de type réseau à pyramide de caractéristiques (« Feature Pyramid Network », FPN) dont on verra le fonctionnement plus en détail plus loin.

Le « stage 2 » ou « head » termine la détection et conclut (il génère la sortie que l'on veut, i.e. un masque de segmentation et/ou une ou plusieurs boites de détection et/ou les classes, des éléments d'intérêts détectés). Le head constitue à ce titre un deuxième sous-réseau dit réseau de détection, et peut être de nombreux types, notamment un réseau entièrement connecté (« Fully connected network », FCN).

Le stage 1 de mask R-CNN comprend également un troisième sous-réseau de type réseau de proposition de région (« Region Proposai Network », RPN) qui est un réseau de détection lui aussi, et un module de rognage (« ROI align » ROI signifiant « Région of Interest »). Le FPN identifie sur les cartes de caractéristiques en sortie du FPN des potentielles régions d'intérêt (i.e. susceptible de contenir un élément d'intérêt), et le module de rognage « réaligne » les cartes de caractéristiques en fonction des coordonnées de ces régions d'intérêt, de sorte à faciliter le travail du réseau de détection.

Comme l'on verra, le présent CNN comprend au moins un premier réseau de type FPN et un deuxième sous-réseau de type réseau de détection, et optionnellement le troisième sous-réseau de type RPN et le module de rognage.

### FPN

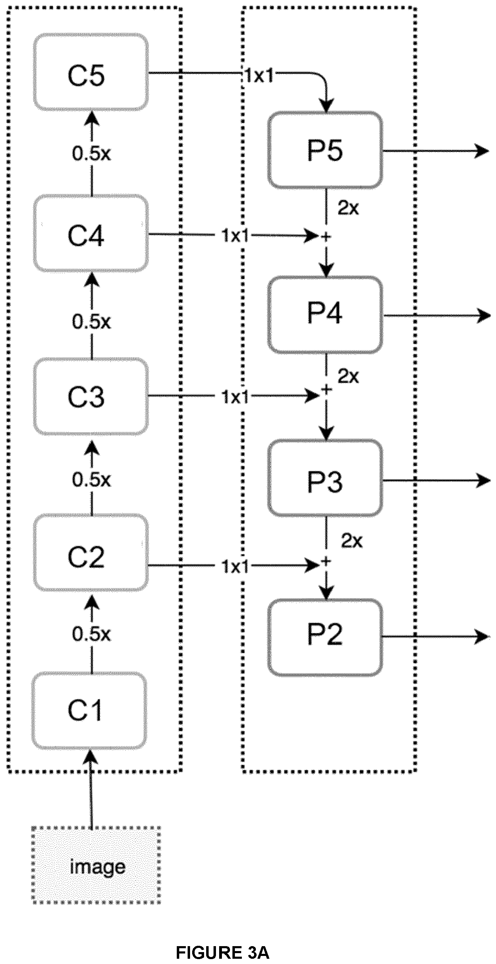

Le FPN (le premier sous-réseau) constitue la partie la plus importante du réseau Mask R-CNN. Il est représenté plus en détail par la figure 3a.

Le FPN se distingue en ce qu'il comprend une branche montante (« bottom-up ») puis une branche descendante (« top-down ») et des connexions latérales entre la branche montante et la branche descendante.

La branche montante, appelée aussi « backbone » du réseau dans sa globalité, est un réseau classique d'extraction de features (caractéristiques) qui peut être de nombreux types, et notamment être un CNN conventionnel (succession directe de blocs de couches de convolution *CONV,* couches de normalisation en batch *BN,* et couches non-linéaires *NL*). Le backbone extrait de l'image d'entrée une pluralité de cartes de caractéristiques (feature maps) initiales C1, C2, C3, C4, C5 représentatives de l'image d'entrée à des échelles différentes. Plus précisément, le backbone est constitué d'une pluralité de blocs de convolution successifs, tels que le premier bloc produit la première carte de caractéristiques initiale C1 à partir de l'image d'entrée, puis le deuxième bloc produit la deuxième carte de caractéristiques initiale C2 à la première carte de caractéristiques initiale C1, etc. Dans l'exemple représenté on a 5 blocs (et donc 5 cartes initiales, mais on peut en avoir moins ou plus).

De manière classique en réseaux de neurones à convolution, on comprend qu'à chaque carte successive l'échelle est moindre (en d'autres termes on diminue la résolution, la carte de caractéristiques devient « plus petite » et donc moins détaillée), mais d'une profondeur sémantique plus grande puisque des structures de plus en plus haut niveau de l'image ont été appréhendées. Plus précisément, les cartes de caractéristiques initiales présentent de plus en plus de canaux lorsque leur taille diminue.

En pratique, entre deux blocs on met une couche de pooling pour diminuer la taille d'un facteur 2, et d'un bloc à l'autre on augmente (et préférentiellement on double) le nombre de filtres des couches de convolutions utilisées (généralement des convolution 3x3), dans le cas à 5 niveaux de la Figure 3a on a par exemple des nombres de canaux successifs de 32, 64, 128, 256 et 512, et des tailles de carte successives (pour une image d'entrée 512x512) de 512x512, 256x256, 128x128, 64x64 et 32x32.

Selon un mode de réalisation préféré, ledit backbone (branche montant du FPN) est de type réseau résiduel. Un réseau résiduel, ou ResNet, est un CNN présentant au moins une « connexion résiduelle » (en anglais « skip connection » ou simplement « short-cut »), c'est-à-dire une connexion qui vient « court-circuiter » au moins une couche, par analogie à ce qu'on constate dans les neurones pyramidaux du cerveau. En pratique, on a au moins une connexion résiduelle par bloc.

En effet, lorsque l'on complexifie un modèle en lui rajoutant des couches, il arrive que certaines de ces couches impactent négativement les performances du modèle. Les connexions résiduelles garantissent que à défaut d'apprendre une transformation utile une couche doit au pire apprendre l'identité, cela évite de dégrader les performances des autres couches. Le principe de fonctionnement à la base des réseaux résiduels est d'additionner point par point l'entrée et la sortie d'une couche de convolution, cela permet de propager le signal des couches moins profondes vers les couches les plus profondes.

Le backbone (branche montant du FPN) peut même être de type réseau « densément connecté » (ou juste réseau dense, ou DenseNet) ; c'est-à-dire que non seulement il présente au moins une connexion résiduelle, mais chaque bloc est dit dense c'est à dire qu'il comprend toutes les connexions résiduelles possibles, i.e. chaque connexion résiduelle reliant une entrée d'une première couche du bloc à une sortie d'une deuxième couche du bloc en aval de la première couche.

Les cartes de caractéristiques C1, C2, C3, C4, C5 obtenues par la branche montante sont dites initiales car elles vont être retraitées par la branche descendante. En effet comme expliqué les cartes « basses » présentent une résolution spatiale supérieure mais une faible profondeur sémantique. La branche descendante vise à augmenter leur profondeur sémantique grâce à l'information des cartes « hautes ».

Ainsi, ladite branche descendante du FPN génère à partie des cartes de caractéristiques initiales C1, C2, C3, C4, C5 une pluralité de cartes de caractéristiques enrichies P2, P3, P4, P5 toujours représentatives de l'image d'entrée à des échelles différentes, mais intégrant l'information des cartes de caractéristiques initiales C1, C2, C3, C4, C5 d'échelle inférieure ou égale.

En d'autres termes chaque carte enrichie Pi présente l'échelle de la carte initiale Ci correspondante (i.e. même taille) mais intègre l'information de toutes cartes {Cj}, pour chaque j≥i. En pratique chaque carte enrichie Pi est générée en fonction de la carte initiale correspondante Ci et/ou la carte enrichie Pi+1 suivante, d'où le caractère « montant et descendant » des branches (i.e. en « U ») : les cartes initiales C1, C2, C3, C4, C5 sont obtenues dans l'ordre montant (C1 puis C2 puis C3 puis C4 puis C5) et ensuite les cartes enrichies sont obtenues dans l'ordre descendant (P5 puis P4 puis P3 puis P2).

En effet le niveau sémantique maximal est obtenu à la dernière carte C5, et à partir de là on redescend en enrichissant chaque carte Ci avec les informations des cartes déjà enrichies C5 ... Ci+1. Les connexions latérales entre la branche montante et la branche descendante permettent de fournir à la branche descendante les diverses cartes initiales.

En pratique :
- La dernière carte enrichie P5 est générée uniquement à partir de la dernière carte initiale C5 (puisque cette dernière présente déjà la profondeur sémantique maximale). A noter qu'on pourrait avoir P5=C5, mais en général une convolution 1x1 est utilisée pour réduire son nombre de canaux (par exemple d'un facteur 2, i.e. à 256) ;
- L'avant dernière carte enrichie P4 est générée à partir de l'avant dernière carte initiale C4 (fournie via la connexion latérale) et la dernière carte enrichie P5, de sorte à ajouter à la carte initiale C4 la profondeur sémantique de la carte enrichie P5 ;
- La carte enrichie P3 est générée à partir de la carte initiale C3 (fournie via la connexion latérale) et la carte enrichie P4, de sorte à ajouter à la carte initiale C3 la profondeur sémantique de la carte enrichie P4 ;
- La carte enrichie P2 est générée à partir de la carte initiale C2 (fournie via la connexion latérale) et la carte enrichie P3, de sorte à ajouter à la carte initiale C2 la profondeur sémantique de la carte enrichie P3 ;
- Il n'y a avantageusement aucune carte enrichie P1 générée à partir de la carte initiale C1 car cette dernière présente une résolution spatiale très élevée, et cette éventuelle carte enrichie P1 serait particulièrement massive.

Préférentiellement, la génération d'une carte enrichie Pi en fonction de la carte initiale correspondante Ci et la carte enrichie Pi+1 supérieure (i.e. cas de toutes les cartes enrichies sauf la deuxième) comprend la remise à l'échelle de la carte enrichie Pi+1, typiquement doublement d'échelle si l'on a eu des divisions par deux d'échelle dans la branche montante (ce que l'on appelle l'upsampling, ou suréchantillonnage), par exemple via la méthode dite des plus proches voisins (« nearest neighbors »), puis la somme élément par élément de la carte initiale Ci (le cas échéant avec le nombre de canaux adaptés via une convolution 1x1) et de la carte enrichie Pi+1 mise à l'échelle (puisque les deux cartes ont à présent la même taille).

Ainsi toutes les cartes enrichies P2, P3, P4 et P5 ont au final le même nombre de canaux (256 dans l'exemple représenté).

### Principe

Les inventeurs ont constaté que le réseau Mask R-CNN « sur-segmente ». Cela signifie qu'il considère à tort des éléments du fond comme faisant partie d'éléments d'intérêt. Plus précisément, les éléments d'intérêts sont bien détectés, le problème se pose au niveau des pixels.

Cela n'a ainsi pas forcément d'impact en détection simple (les boites de détection peuvent être juste un peu trop grandes), mais cela se voit particulièrement sur les masques de segmentation. Par exemple, en référence à la figure 6, la ligne du haut représente des empreintes digitales latentes, et la ligne du milieu les masques de segmentation obtenus via Mask R-CNN en l'état : on voit bien que ces masques intègrent des éléments faux, comme des fragments de la lettre « E » du fond de l'image de gauche. Cela est problématique, car le masque de segmentation devrait discriminer l'élément d'intérêt du fond, au plus proche. On constate en fait que l'idée de conserver toute l'information dans les cartes de caractéristiques enrichies fait qu'on conserve également l'information « inutile » relative au fond et non aux éléments d'intérêt, d'où le risque de sur-segmentation. L'idée du présent procédé est d'intégrer dans le FPN des moyens d'amélioration de « l'attention » entre la branche montante et la branche descendante de sorte à détruire l'information inutile.

On suppose que chaque connexion latérale est associée de manière unique à une carte de caractéristiques initiale C2, C3, C4, C5 et transmet cette carte de caractéristique de la branche montante à la branche descendante du FPN. En particulier, pour au moins une carte de caractéristiques enrichie P2, P3, P4, P5 (et préférentiellement chaque carte de caractéristiques enrichie P2, P3, P4, P5), une carte de caractéristiques initiale C2, C3, C4, C5 de même échelle est préférentiellement transmise de la branche montante à la branche descendante du FPN via la connexion latérale associée de manière unique à cette carte de caractéristiques initiale C2, C3, C4, C5.

De manière préférée on a une connexion latérale pour chaque carte de caractéristiques initiale C2, C3, C4, C5 autre que la carte de caractéristiques initiale de plus grande échelle C1 (i.e. la carte de caractéristiques initiale de plus grande échelle C1 n'est pas transmise de la branche montante à la branche descendante du FPN) et/ou une connexion latérale pour chaque carte de caractéristiques enrichie P2, P3, P4, P5. En effet, on a au moins autant de cartes de caractéristiques initiales C1, C2, C3, C4, C5 que de cartes de caractéristiques enrichies P2, P3, P4, P5, puisque chaque carte de caractéristiques enrichie P2, P3, P4, P5 est générée au moins à partir de la carte de caractéristiques initiale C2, C3, C4, C5 de même échelle (on rappelle qu'il n'y a pas de carte enrichie « P1 » correspondant à la carte de caractéristiques initiale de plus grande échelle C1), fournie via la connexion latérale associée, et en particulier la carte de caractéristiques enrichie de plus petite échelle P5 est uniquement générée à partir de la carte de caractéristiques initiale de plus petite échelle C5 et chaque autre carte de caractéristiques enrichie P2, P3, P4 est générée à partir de la carte de caractéristiques initiale C2, C3, C4 de même échelle et d'une carte de caractéristiques enrichie P2, P3, P4 d'échelle inférieure, en cascade.

Plus précisément, au moins une des connexions latérales du FPN comprend un module d'attention, en l'espèce une connexion latérale qui est associée à une carte de caractéristiques initiale C2, C3, C4 autre que la carte de caractéristiques initiale de plus petite échelle C5, avantageusement également la connexion latérale qui est associée à la carte de caractéristiques initiale de plus petite échelle C5, et préférentiellement chaque connexion latérale. Le module d'attention d'une connexion latérale est présent pour la focalisation de la carte de caractéristiques initiale C2, C3, C4, C5 transmise via ladite connexion latérale (i.e. celle à laquelle est associée). Ainsi, la carte de caractéristiques initiale C2, C3, C4, C5 transmise via une connexion latérale pourvue d'un module d'attention est dite focalisée. Typiquement, le module d'attention remplace l'éventuelle convolution 1x1.

Ainsi au moins une carte de caractéristiques enrichie P2, P3, P4 autre que la carte de caractéristiques enrichie de plus petite échelle P5 (et préférentiellement chaque carte de caractéristiques enrichie P2, P3, P4 autre que la carte de caractéristiques enrichie de plus petite échelle P5) est générée en ajoutant la carte de caractéristiques initiale C2, C3, C4 (associée à la connexion latérale pourvue d'un module d'attention) focalisée par le module d'attention et une carte de caractéristiques enrichie P3, P4, P5 d'échelle inférieure mise à la même échelle que ladite carte de caractéristiques initiale C2, C3, C4.

Par module d'attention, on entend un module qui détruit l'information des cartes de caractéristiques qui ne concerne pas les éléments d'intérêt (i.e. relative au fond), ce qui focalise l'attention du deuxième sous-réseau de détection sur les éléments d'intérêt, et limite ainsi la sur-segmentation.

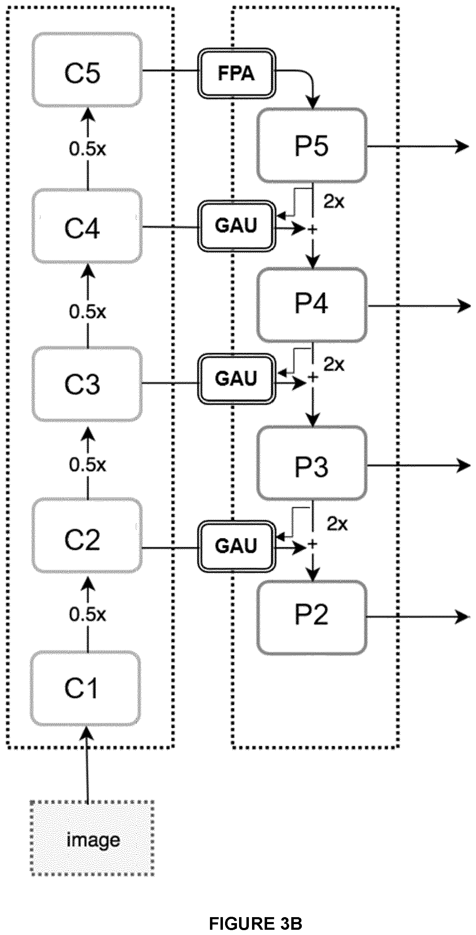

On va à présent décrire un premier et un deuxième type de module d'attention possible, respectivement appelés module d'attention à pyramide de caractéristiques (« Feature Pyramid Attention », FPA) et module d'attention globale pour suréchantillonnage (« Global Attention Upsample », GAU). Comme l'on verra, avantageusement la dernière connexion latérale du FPN (la barre du « U ») comprend le premier module FPA, et chaque autre connexion latérale du FPN comprend le deuxième module GAU, comme l'on voit sur la **figure 3b**. Néanmoins l'invention ne sera pas limitée à ces exemples de modules d'attention.

Les modules FPA et GAU sont décrit dans le document Hanchao Li, Pengfei Xiong, Jie An, Lingxue Wang; Pyramid Attention Network for Semantic Segmentation auquel l'homme du métier pourra se référer.

On note que dans ce document les modules FPA et GAU ne sont à proprement pas utilisé comme modules d'attention an sens de la présente invention, mais directement comme encodeurs : en effet dans ce document le réseau décrit (« Pyramid attention network ») est directement un réseau de segmentation, et non un premier sous-réseau de génération de cartes de caractéristiques enrichies P2, P3, P4 et P5 pour un deuxième sous-réseau de détection. En d'autres termes, la branche descendante du réseau décrit n'a pas pour fonction d'enrichir les cartes de caractéristiques initiales C1, C2, C3, C4 et C5 de la branche montante, mais seulement de générer le masque de segmentation (qui est une image, d'où la fonction d'encodeur des modules) à partir des cartes de caractéristiques initiales. Un tel réseau de segmentation est trop simple en particulier pour des empreintes digitales latentes, et ne donne pas de meilleurs résultats que Mask R-CNN (ligne du milieu de la figure 6).

Les inventeurs ont constaté que le fait d'utiliser les FPA et GAU non pas pour générer le masque mais en tant que module d'attention pour simplement « contrôler » l'enrichissement des cartes de caractéristiques initiales via leur focalisation dans une architecture pyramidale facilite grandement le travail du réseau de détection distinct et offre des résultats bien au-delà de tout ce qui pouvait être prévu, voir notamment la dernière ligne de la figure 6 où l'on voit les masques de segmentation très réalistes obtenus.

De surcroit, le temps de traitement est extrêmement réduit. Le tableau 1 ci-dessous (qu'on décrira en détails plus loin) montre que comparativement avec FingerNet qui est le seul réseau arrivant actuellement à segmenter des latentes (et encore la qualité des masques obtenus par FingerNet reste en deçà des résultats visibles sur la figure 6), le temps d'identification d'une empreinte latente est 10 fois plus court en utilisant le présent CNN (désigné MRCNN-Idemia) pour la segmentation, ce que rend possible une utilisation temps réel.

**Table 1**

| | | | **None** | **Ground Truth** | **Finger Net** | **MRCNN -Idemia** |
|---|---|---|---|---|---|---|
| **Accuracy** | **Rank 1** | | 66,30% | 67,40% | 67,80% | 67,40% |
| | **Rank 10** | | 70,60% | 71,80% | 71,70% | 72,20% |
| **Computing time** | **1024x 1024** | **CPU** | - | - | **27,400s** | **2,600s** |
| | | **GPU** | - | - | **1,120s** | **0,140s** |

### FPA

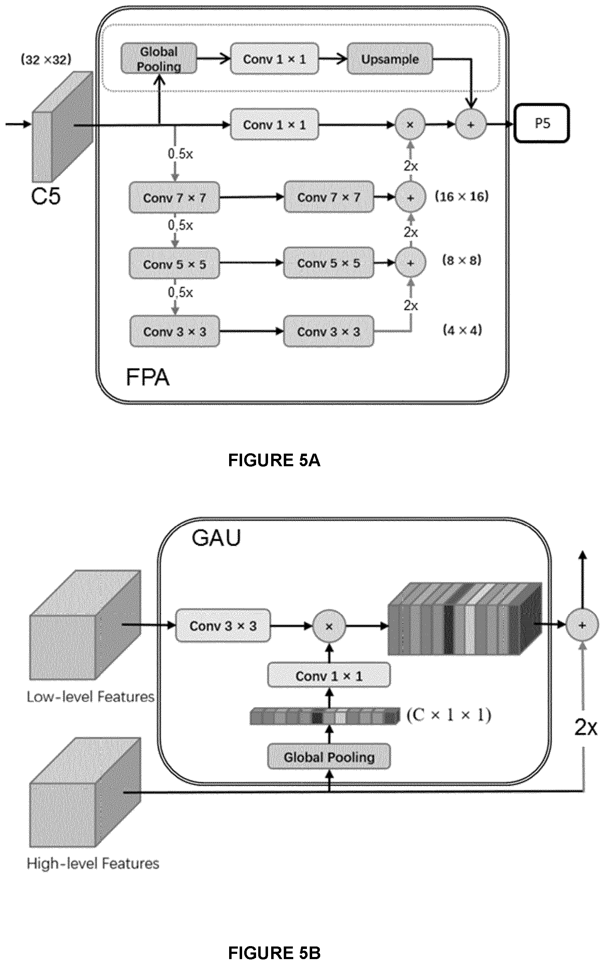

En référence à la figure 5a, le module FPA est disposé sur la dernière connexion latérale (il permet de générer la dernière carte enrichie P5 à partir de la dernière carte initiale C5).

Il comprend avantageusement un bloc constituant un « mini » FPN (d'où la géométrie en U), et continuant virtuellement sur quelques niveaux à diminuer puis réaugmenter la taille de la carte de caractéristiques (pour C5 de taille 32x32, on génère des cartes 16x16, 8x8 et 4x4). Cela permet de simuler la présence d'étages supplémentaires C6, et C7 et C8, de sorte que P5 n'est pas juste une transposition de C5 mais « intègre » virtuellement des informations de C6 C7 et C8.

Dans la mesure où ces tailles sont vraiment faibles, on peut utiliser des convolutions 7x7, 5x5 et 3x3 sans que cela n'ait un impact sur le temps de traitement (on rappelle que dans ResNet et notamment RestNet-101 préférentiellement utilisé pour le backbone il n'y a que des convolution 3x3). Ces informations ne sont pas ajoutées à la carte de caractéristiques C5 d'origine mais multipliées élément par élément pour effectivement focaliser l'information dans cette carte P5 par rapport à la carte C5. On comprend ainsi que la carte P5 comprend en pratique moins d'information que C5 mais celle-ci reste « enrichie » car on a remplacé de l'information inutile par de l'information utile.

A noter qu'en complément du mini-FPN, comme l'on voit sur la figure 5a il peut y avoir optionnellement une branche de average pooling global (on obtient une carte de caractéristiques réduite à 1 pixel mais avec un grand nombre de canaux) puis de rééchantillonnage pour obtenir une carte de la taille de l'entrée.

### GAU

En référence à la figure 5b, le module GAU est disposé sur les autres connexion latérale, pour la génération des autres cartes initiales Pi, i=2, 3 ou 4 impliquant un ajout avec la carte enrichie Pi+1 supérieure mise à l'échelle.

Le module GAU prend en entrée à la fois la carte initiale Ci de la connexion latérale, mais également la carte enrichie Pi+1 supérieure (encore non mise à l'échelle).

Ce module GAU met en œuvre du average pooling global de la carte enrichie Pi+1 supérieure. En d'autres termes, la carte enrichie est réduite à un objet de dimensions 1x1xC (un pixel à un grand nombre C de canaux), qui passe par une convolution 1x1 pour contrôler le nombre de canaux, une normalisation en batch et une couche non linéaire (ReLU) puis comme dans le FPA multipliée élément par élément avec la carte initiale d'entrée Ci pour focaliser l'attention de celle-ci sur les éléments d'intérêt tels qu'apparents dans la carte enrichie Pi+1 supérieure.

C'est cette carte initiale Ci « focalisée » qui peut alors être sommée avec la carte enrichie Pi+1 mise à l'échelle (puisque les deux cartes ont à nouveau la même taille) dans la branche descendante de sorte à obtenir la carte enrichie Pi, qui par transitivité est elle-même focalisée.

### Procédé

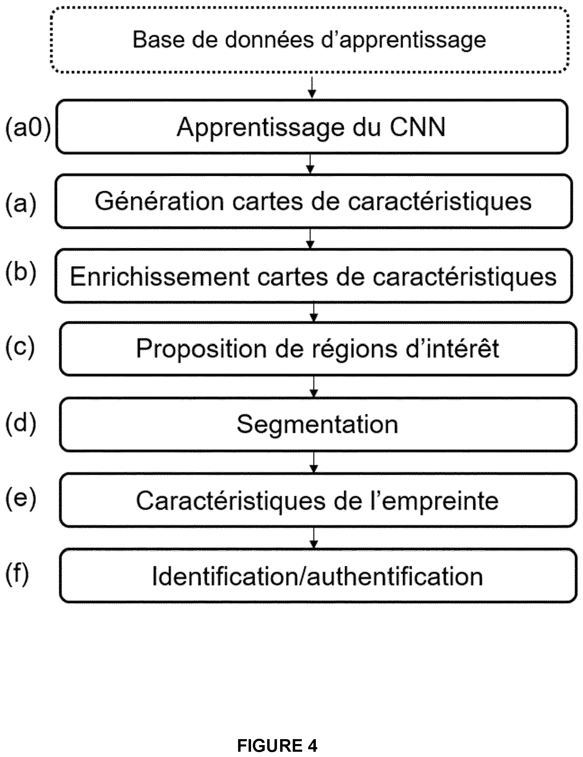

En résumé, en référence à la figure 4, le présent procédé de détection d'au moins un élément d'intérêt visible (avantageusement de type empreinte biométrique) dans une image d'entrée commence par une étape (a) d'extraction, au moyen de la branche montante du premier sous-réseau FPN dudit CNN, d'une pluralité de cartes de caractéristiques initiales C1, C2, C3, C4, C5 représentatives de l'image d'entrée à des échelles différentes, ledit FPN comprenant en outre une branche descendante et des connexions latérales entre la branche montante et la branche descendante, au moins une (préférentiellement chaque) connexion latérale comprenant comme expliqué un module d'attention.

Ensuite, dans une étape (b), le procédé comprend la génération, au moyen de ladite branche descendante du FPN, d'une pluralité de cartes de caractéristiques enrichies P2, P3, P4, P5 également représentatives de l'image d'entrée à des échelles différentes, chaque carte de caractéristiques enrichie P2, P3, P4, P5 intégrant l'information des cartes de caractéristiques initiales C1, C2, C3, C4, C5 d'échelle inférieure ou égale. On comprend comme expliqué que chaque module d'attention permet de « focaliser » les cartes de caractéristiques initiales C2, C3, C4, C5 reçues via les connexions latérales, lors de leur prise en compte dans la génération des cartes enrichies P2, P3, P4, P5.

Dans une étape (c) optionnelle, un troisième sous-réseau RPN dudit CNN identifie dans les cartes de caractéristiques enrichies P2, P3, P4, P5 un ensemble de régions d'intérêt contenant potentiellement un élément d'intérêt, et le cas échéant un module de rognage réaligne chaque carte de caractéristiques enrichie P2, P3, P4, P5 en fonction des régions d'intérêt identifiées.

Dans une étape (d) le procédé comprend alors la détection en elle-même, au moyen du deuxième sous-réseau dudit CNN, dit réseau de détection, prenant en entrée lesdites cartes de caractéristiques enrichies P2, P3, P4, P5., le cas échéant réalignées grâce au module de rognage Préférentiellement, chaque carte de caractéristiques enrichies P2, P3, P4, P5 est prise en entrée du réseau de détection.

Si ledit réseau de détection est un réseau de segmentation, le résultat de la détection (i.e. la sortie du deuxième sous-réseau est un masque de segmentation).

Dans une éventuelle étape (e), ladite image d'entrée segmentée (i.e. sur laquelle a été appliquée le masque de segmentation comme expliqué) est avantageusement traitée de sorte à extraire des caractéristiques recherchées de l'au moins une empreinte biométrique visible sur ladite image d'entrée.

### Apprentissage

Avantageusement, le procédé commence par une étape (a0) d'apprentissage, par les moyens de traitement de données 11 du serveur 1, à partir d'une base d'images d'empreintes biométriques déjà annotées (i.e. pour lesquelles on dispose d'un résultat de détection comme une boite ou un masque de segmentation), de paramètres dudit CNN. On note que les paramètres de tous les sous-réseaux peuvent être appris en même temps, soit sous-réseau par sous-réseau, et le cas échéant bloc par bloc dans un sous-réseau (en figeant ceux des autres blocs). En particulier on peut apprendre les blocs du FPN en commençant par la fin (C5/P5, puis C4/P4, etc.), en même temps que tout le réseau de détection et l'éventuel RPN.

Cet apprentissage peut être réalisé de façon classique. La fonction de coût d'apprentissage peut être composée d'une attache aux données classique - erreur quadratique moyenne - et d'une régularisation par variation totale.

De façon classique, dans le cas d'empreinte biométriques de type empreinte digitale, on peut partir d'une base d'empreintes de bonne qualité et des algorithmes d'augmentations peuvent être mis en œuvre de sorte à démultiplier la taille de la base d'apprentissage et fabriquer artificiellement des empreintes latentes (par exemple en déformant les empreintes de bonne qualité, en créer des occlusions, etc.), pour assurer la robustesse du CNN à des défauts d'acquisition usuels.

Le CNN appris peut-être stocké le cas échéant sur des moyens de stockage de données 22 du client 2 pour utilisation en détection. A noter que le même CNN peut être embarqué sur de nombreux clients 2, un seul apprentissage est nécessaire.

### Identification/authentification

Comme expliqué, dans une étape (e), ladite image segmentée peut être traitée de sorte à extraire lesdites caractéristiques recherchées de l'au moins une empreinte biométrique représentée par ladite image d'entrée, lesquelles peuvent notamment comprendre la position et/ou l'orientation de minuties dans le cas d'empreintes digitales.

Comme expliqué l'étape (d) peut comprendre l'application sur l'image d'entrée du masque de segmentation obtenu de sorte à isoler la ou les empreintes représentées, en tant qu'images distinctes. En effet il peut y avoir plusieurs empreintes biométriques sur une seule image d'entrée. L'étape (e) est avantageusement mise en œuvre pour chaque empreinte isolée.

De façon préférée, le procédé comprend en outre une étape (f) d'identification ou d'authentification d'au moins un individu par comparaison des caractéristiques recherchées extraites de la (ou chaque) empreinte biométrique représentée par ladite image d'entrée, avec les caractéristiques d'empreintes biométriques de référence, qui pourra être mise en œuvre de n'importe quelle façon connue de l'homme du métier.

Par exemple, le client 2 peut stocker les caractéristiques des empreintes d'une ou plusieurs personnes inscrites dans un fichier de police comme empreintes de référence, de sorte à pouvoir identifier la personne ayant laissé une empreinte latente : si les caractéristiques extraites correspondent à celles attendues d'un individu connu, l'identité de celui-ci est transmise aux forces de police. Alternativement, le client 2 peut envoyer les caractéristiques extraites à une base de données distante desdites caractéristiques d'empreintes biométriques de référence, pour identification de l'individu.

A noter que les étapes (e) et/ou (f) peuvent être mises en œuvre comme une étape de classification d'une empreinte isolée, par exemple via un ou plusieurs CNN dédiés, et le cas échéant comprendre des traitements d'amélioration des empreintes isolées, voir notamment la demande FR 1860323.

### Résultats

Le tableau 1 ci-dessus compare, comme expliqué, les performances du réseau FingerNet et du présent CNN MRCNN-Idemia.

Il s'agit en pratique d'un test d'identification (étape (f)), mis en œuvre suite à un apprentissage sur des bases d'empreintes biométriques, que nous appellerons base A et base B. La base A contient 1117 empreintes digitales latentes et les équivalents de bonne qualité (TP), et la base B contient 100000 empreintes TP, et sert de base de bruit.

Le Tableau 1 montre que pour le traitement d'une image de latente, non seulement MRCNN-Idemia est plus rapide, mais en rang 10, comparativement à l'absence de traitement (« none »), la vérité terrain (« ground truth », i.e. l'image segmentée à la main) et à la solution FingerNet (de l'état de l'art) on améliore encore davantage la précision. On rappelle que le rang 10 (regarder 10 candidates) est pour les latentes plus pertinent que le rang 1 (regarder uniquement la meilleure candidate).

Cela est dû, comme illustré par la figure 6, à la qualité des masques de segmentation obtenus malgré le traitement très rapide.

### Produit programme d'ordinateur

Selon un deuxième et un troisième aspects, l'invention concerne un produit programme d'ordinateur comprenant des instructions de code pour l'exécution (en particulier sur les moyens de traitement de données 11, 21 du serveur 1 et/ou du client 2) d'un procédé de détection d'au moins un élément d'intérêt visible sur une image d'entrée, ainsi que des moyens de stockage lisibles par un équipement informatique (une mémoire 12, 22 du serveur 1 et/ou du client 2) sur lequel on trouve ce produit programme d'ordinateur.

## Revendications

1. Procédé de détection d'au moins un élément d'intérêt visible sur une image d'entrée, au moyen d'un réseau de neurones à convolution, CNN, le procédé étant **caractérisé en ce qu'**il comprend la mise en œuvre, par des moyens de traitement de données (21) d'un client (2), d'étapes de :
(a) Extraction, au moyen d'une branche montante d'un premier sous-réseau dudit CNN de type réseau à pyramide de caractéristiques, FPN, d'une pluralité de cartes de caractéristiques initiales (C1, C2, C3, C4, C5) représentatives de l'image d'entrée à des échelles différentes, ledit FPN comprenant en outre une branche descendante et des connexions latérales entre la branche montante et la branche descendante, chaque connexion latérale transmettant de la branche montante à la branche descendante du FPN une carte de caractéristique initiale (C2, C3, C4, C5) à laquelle elle est associée de manière unique, au moins une connexion latérale associée à une carte de caractéristiques initiale (C2, C3, C4) autre que la carte de caractéristiques initiale de plus petite échelle (C5) comprenant un module d'attention ;
(b) Génération, au moyen de ladite branche descendante du FPN, d'une pluralité de cartes de caractéristiques enrichies (P2, P3, P4, P5) également représentatives de l'image d'entrée à des échelles différentes, chaque carte de caractéristiques enrichie (P2, P3, P4, P5) intégrant l'information des cartes de caractéristiques initiales (C1, C2, C3, C4, C5) d'échelle inférieure ou égale ;
(d) Détection d'au moins un élément d'intérêt visible sur une image d'entrée, au moyen d'un deuxième sous-réseau dudit CNN, dit réseau de détection, prenant en entrée lesdites cartes de caractéristiques enrichies (P2, P3, P4, P5).

2. Procédé selon la revendication 1, dans lequel pour chaque carte de caractéristiques enrichie (P2, P3, P4, P5), une carte de caractéristiques initiale (C2, C3, C4, C5) de même échelle est transmise de la branche montante à la branche descendante du FPN via la connexion latérale associée à cette carte de caractéristiques initiale (C2, C3, C4, C5).

3. Procédé selon l'une des revendications 1 et 2, dans lequel la carte de caractéristiques initiale de plus grande échelle (C1) n'est pas transmise de la branche montante à la branche descendante du FPN.

4. Procédé selon l'une des revendications 1 à 3, dans lequel la carte de caractéristiques enrichie de plus petite échelle (P5) est générée à partir de la carte de caractéristiques initiale de plus petite échelle (C5), chaque autre carte de caractéristiques enrichie (P2, P3, P4) est générée à partir de la carte de caractéristiques initiale (C2, C3, C4) de même échelle et d'une carte de caractéristiques enrichie (P2, P3, P4) d'échelle inférieure.

5. Procédé selon l'une des revendications 1 à 4, dans lequel au moins une carte de caractéristiques enrichie (P2, P3, P4) autre que la carte de caractéristiques enrichie de plus petite échelle (P5) est générée en ajoutant la carte de caractéristiques initiale (C2, C3, C4) focalisée par le module d'attention et une carte de caractéristiques enrichie (P3, P4, P5) d'échelle inférieure mise à la même échelle que ladite carte de caractéristiques initiale (C2, C3, C4).

6. Procédé selon l'une des revendications 1 à 5, dans lequel la connexion latérale associée à la carte de caractéristiques initiale de plus petite échelle (C5) comprend un module d'attention d'un premier type, le module d'attention de ladite connexion latérale associée à une carte de caractéristiques initiale (C2, C3, C4) autre que la carte de caractéristiques initiale de plus petite échelle (C5) étant d'un deuxième type.

7. Procédé selon la revendication 6, dans lequel chaque connexion latérale associée à une carte de caractéristiques initiale (C2, C3, C4) autre que la carte de caractéristiques initiale de plus petite échelle (C5) comprend un module d'attention du deuxième type.

8. Procédé selon la revendication 7, dans lequel le premier type de module d'attention est un module d'attention à pyramide de caractéristiques, FPA ; et/ou le deuxième type de module d'attention est un module d'attention globale pour suréchantillonnage, GAU.

9. Procédé selon l'une des revendications 1 à 8, comprenant en outre une étape (c) d'identification dans les cartes de caractéristiques enrichies (P2, P3, P4, P5), au moyen d'un troisième sous-réseau dudit CNN de type réseau de proposition de région, RPN, de régions d'intérêt contenant potentiellement un élément d'intérêt ; l'étape (c) comprenant préférentiellement le réalignement par un module de rognage du CNN de chaque carte de caractéristiques enrichie (P2, P3, P4, P5) en fonction des régions d'intérêt identifiées, de sorte que l'étape (d) soit mise en œuvre sur les cartes de caractéristiques enrichie (P2, P3, P4, P5) réalignées.

10. Procédé selon l'une des revendications 1 à 9, comprenant une étape (a0) préalable d'apprentissage, par des moyens de traitement de données (11) d'un serveur (1), à partir d'une base d'images d'élément d'intérêts déjà annotés, de paramètres dudit CNN.

11. Procédé selon l'une des revendications 1 à 10, dans lequel l'étape (d) comprend la segmentation de l'image d'entrée.

12. Procédé selon la revendication 11, dans laquelle les éléments d'intérêts sont des empreintes biométriques, le procédé comprenant une étape (e) de traitement de ladite image d'entrée segmentée de sorte à extraire lesdites caractéristiques recherchées de chaque empreinte biométrique représentée par ladite image d'entrée ; lesdites empreintes biométriques étant en particulier des empreintes digitales, les caractéristiques recherchées à extraire de l'au moins une empreinte digitale représentée par ladite image d'entrée comprenant la position et/ou l'orientation de minuties.

13. Procédé selon la revendication 12, dans lequel l'au moins une empreinte biométrique représentée par l'image d'entrée est celle d'un individu, le procédé comprenant en outre une étape (f) d'identification ou d'authentification dudit individu par comparaison des caractéristiques recherchées extraites de l'empreinte biométrique représentée par ladite image d'entrée, avec les caractéristiques d'empreintes biométriques de référence.

14. Produit programme d'ordinateur comprenant des instructions de code pour l'exécution d'un procédé selon l'une des revendications 1 à 13 de détection d'au moins un élément d'intérêt visible sur une image d'entrée, lorsque ledit programme est exécuté sur un ordinateur.

15. Moyen de stockage lisible par un équipement informatique sur lequel un produit programme d'ordinateur comprend des instructions de code pour l'exécution d'un procédé selon l'une des revendications 1 à 13 de détection d'au moins un élément d'intérêt visible sur une image d'entrée.
